# EUROPÄISCHE PATENTSCHRIFT

(11) **EP 0 865 147 B1**
(45) Veröffentlichungstag und Bekanntmachung des Hinweises auf die Patenterteilung: **23.09.1998**
(21) Anmeldenummer: 97108738.2
(22) Anmeldetag: 01.06.1997
(51) Int. Cl.: H02K 17/14, H02P 1/32, H02P 7/48, F04D 27/02

(54) **Elektrischer Ventilator**
Electric fan
Ventilateur électrique

(43) Veröffentlichungstag der Anmeldung: 16.09.1998
(73) Patentinhaber: Jakob, Karl, Dipl.-Ing.(FH), D-85598 Baldham (DE)
(72) Erfinder: Jakob, Karl, Dipl.-Ing.(FH), D-85598 Baldham (DE)
(74) Vertreter: Körner, Ekkehard, Dipl.-Ing.

(56) Entgegenhaltungen:
- EP-A- 0 139 869
- DE-A- 3 029 843
- DE-A- 3 347 651
- FR-A- 2 632 362
- US-A- 3 197 686
- US-A- 4 363 985
- PATENT ABSTRACTS OF JAPAN vol. 005, no. 205 (E-088), 25.Dezember 1981 & JP 56 125955 A (TOSHIBA CORP), 2.Oktober 1981,

## Beschreibung

Die Erfindung bezieht sich auf einen elektrischen Ventilator mit einem Drehstrommotor nach dem Oberbegriff des Anspruchs 1. Ein solcher Ventilator ist aus der FR-A-2 632 362 bekannt.

Rückkühler von Kühlanlagen geben ihre Wärme in aller Regel an die Umgebungsluft ab und haben zu diesem Zweck elektrische Ventilatoren. Diese müssen in der Drehzahl verstellt werden, um die Rückkühlleistung dem wechselnden Kühlbedarf anzupassen, der u.a. von der Umgebungstemperatur abhängt. So ist häufig nachts ein geringerer Kühlbedarf vorhanden, als am Tage, insbesondere auch beispielsweise bei Supermärkten, wo tagsüber nicht nur wegen der höheren Umgebungstemperatur, sondern auch wegen des Zugangs zu den Kühl räumen und Kühltruhen der Kühlbedarf zusätzlich gegenüber dem Nachtbetrieb erhöht ist.

Die obengenannte Druckschrift beschreibt einen von einem Drehstrommotor angetriebenen Ventilator für die Kühlung von elektronischen Sichtgeräten oder Gehäusen, die in einem Flugzeug installiert sind. Ventilatoren in diesem Anwendungsbereich müssen, wie in der Druckschrift angegeben ist, mit Drehzahlen in der Größenordnung von 20.000 U/min arbeiten, was viel Lärm erzeugt, der die Piloten stört. Da der Kühlbedarf schwankt, war es in Installationen dieser Art üblich, den Ventilator intermittierend zu betreiben. Die Gesamtdauer des Betriebs mit hoher Drehzahl wird dadurch aber nicht ausreichend reduziert. Daher gibt die Druckschrift eine Lösung an, bei der die wirksame Polzahl des Drehstrommotors mit Hilfe einer Umschalteinrichtung umgeschaltet wird, sodaß der Drehstrommotor wahlweise mit voller oder mit reduzierter Drehzahl betrieben werden kann. Als Vorteil wird erreicht, daß die Gesamtdauer, in der der Ventilator mit voller Drehzahl läuft, vermindert ist, weil in der übrigen Zeit die Kühlung durch den Ventilator nicht vollständig unterbunden ist. Nachteilig an dieser Lösung ist aber, daß die zum Betrieb mit niedriger Drehzahl erforderliche Vergrößerung der Polzahl einen höheren Bauaufwand erfordert und daß im Betrieb mit kleiner wirksamer Polzahl die Phasenwicklungen nicht vollständig ausgenutzt werden, sodaß auch dadurch der Bauaufwand höher ist, als bei einem nicht polumschaltbaren Drehstrommotor für vergleichbar hohe Drehzahl.

Andere bekannte Verfahrensweisen und Vorrichtungen zur Beeinflussung der Drehzahl eines Drehstrommotors bestehen in der Änderung der Frequenz der Versorgunsspannung mit Hilfe von Frequenzumformern, wie bei modernen Elektrolokomotiven üblich, oder durch eine Phasenanschnittssteuerung der den Motorwicklungen zugeführten Versorgungsspannungen. Eine Frequenzänderung ist relativ aufwendig und bei einem Ventilatormotor deshalb auch unwirtschaftlich, weil bei herabgesetzter Drehzahl der Drehstrommotor überhaupt nicht die volle Leistung erbringen muß. Man verwendet in solchen Fällen daher häufig die Phasenanschnittssteuerung. Diese ist jedoch mit Nachteilen verbunden, weil sie den Motor quasi impulsweise mit Spannung versorgt, was sehr starke Oberwellen elektrischer und mechanischer Art erzeugt, die zur Folge haben, daß der Drehstrommotor erheblich Geräusch entwickelt. So konnte beobachtet werden, daß bei einem Ventilator von etwa 1 m Flügeldurchmesser, der von einem zwölfpoligen Drehstrommotor bei Vollast mit einer Nenndrehzahl von etwa 470 U/min angetrieben wird und dabei eine Geräuschentwicklung von etwa 73 dBa hat, eine Verminderung der Drehzahl auf etwa 250 U/min mit Hilfe einer Phasenanschnittssteuerung der Versorgungsspannung nicht zu einer vergleichbaren Verminderung der Geräuschentwicklung führt. Die Verminderung der Luftströmungsgeräusche wird nämlich durch eine Zunahme der Brumm- und Schwingungsgeräusche kompensiert, die vom Motor und den mit ihm mechanisch verbundenen Teilen hervorgerufen werden. Man kann die Zunahme solcher Schwingungen bei abnehmender Drehzahl mit der Hand an dem Motorgehäuse abfühlen.

Mit Hilfe von Dalanderschaltungen lassen sich bei Drehstrommotoren mehrere feste Drehzahlen erzielen. Mit Dalanderschaltungen wird die Anzahl der wirksamen Pole verändert. Der Schlupf ist bei allen Drehzahlen gleich, d.h. etwa 3%. Bei manchen dieser Schaltungen bleiben einzelne Wicklungen bei manchen wirksamen Polzahlen (Drehzahlen) stromlos. Solche Dalanderschaltungen bedingen somit ein höheres Wicklungsvolumen und vergrößern daher den Motor bei gegebener Leistung, wie oben schon bei der Diskussion der FR-A-2 632 362 erläutert.

Der Erfindung liegt die Aufgabe zugrunde, einen elektrischen Ventilator anzugeben, dessen Drehzahl in einem weiten Bereich veränderlich ist und dessen Motor bei herabgesetzten Drehzahlen keine Zunahme der Geräuschentwicklung zeigt und einen kompakten Aufbau hat.

Diese Aufgabe wird durch die im Anspruch 1 angegebenen Merkmale gelöst. Vorteilhafte Aufgestaltungen der Erfindung sind Gegenstand der Unteransprüche.

Die Erfindung geht von der Tatsache aus, daß dem Motor bei verringerten Drehzahlen nur eine verringerte Leistung abverlangt wird, weil nämlich die Last, die dem Motor von einem Ventilatorflügel vermittelt wird, bei abnehmender Drehzahl quadratisch abnimmt. Demnach ist es möglich, den Ventilator mit niedrigerer Drehzahl als der Nenndrehzahl durch Vergrößerung des magnetischen Schlupfes im Drehstrommotor zu betreiben, ohne daß es zu einer Überlastung des Drehstrommotors kommt.

Die Erfindung sieht vor, für die Erzielung niedriger Drehzahlen die das Drehfeld hervorrufenden Wicklungen mit verminderten Spannungen zu betreiben. Dazu wird aber nicht die dem Motor insgesamt zugeführte effektive Betriebsspannung herabgesetzt, wie dies beispielsweise mit Phasenanschnittssteuerungen gemacht wird, sondern die einzelnen Polwicklungen des Motors sind in mehrere Teilwicklungen unterteilt, die verschiedenartig, je nach zu erzielender Drehzahl, miteinander verbunden werden, um so den einzelnen Teilwicklungen je nach Verschaltung unterschiedliche Teilspannungen aus dem Versorgungsspannung zuzuführen.

Im Gegensatz zu den bekannten Dalanderschaltungen, wo für vier unterschiedliche Drehzahlen insgesamt vier Teilwicklungen benötigt werden und bei manchen Drehzahlen einige stromlos bleiben, der Schlupf aber unverändert ist, bleibt bei der vorliegenden Erfindung in allen Schaltungsvarianten die Polzahl unverändert und sind im Betrieb stets alle Teilwicklungen stromdurchflossen, ändert sich aber der Schlupf von Drehzahl zu Drehzahl.

Aus den Patent Abstract of Japan, Vol. 005, No. 205 (E-088) und der entsprechenden JP 56-125,955 A ist hierzu bereits bekannt, die Polwicklungen eines Drehstrommotors mit Mittenanzapfungen zu versehen, wodurch es möglich wird, die Verschaltung der Polwicklungen von einer Dreieckschaltung, in der die Wicklungsenden miteinander verbunden sind und an deren Ecken die Netzspannung zugeführt wird, in eine Schaltung zu ändern, bei der eine innere Dreieckschaltung aus jeweils nur einer Hälfte der Polwicklungen über die anderen Hälften der Polwicklungen sternförmig mit dem Drehstromnetz verbunden ist, wodurch die Motorleistung auf etwa die Hälfte der Nennleistung herabsetzbar ist. Die Enden der Wicklungshälften sind nicht individuell zugänglich, sodaß eine Parallelschaltung von Wicklungshälften nicht möglich ist, ganz abgesehen davon, daß die Wicklungshälften für einen Betrieb jeweils an voller Spannung Phase gegen Phase des Drehstromnetzes nicht dimensioniert sind.

Die Erfindung wird nachfolgend unter Bezugnahme auf die Zeichnungen am Beispiels eines zwölfpoligen Drehstrohmmotors näher erläutert, bei dem jede Polwicklung in zwei Teilwicklungen unterteilt ist.
- Fig. 1: zeigt ein Blockschaltbild des Drehstromantriebs des erfindungsgemäßen Ventilators,
- Fig. 2: zeigt das Wicklungsschema des Drehstrommotors der dargestellten Ausführungsform der Erfindung, und
- Fig. 3 bis 7: zeigen verschiedene Schaltungskonfigurationen zur Erzielung von fünf unterschiedlichen Drehzahlen.

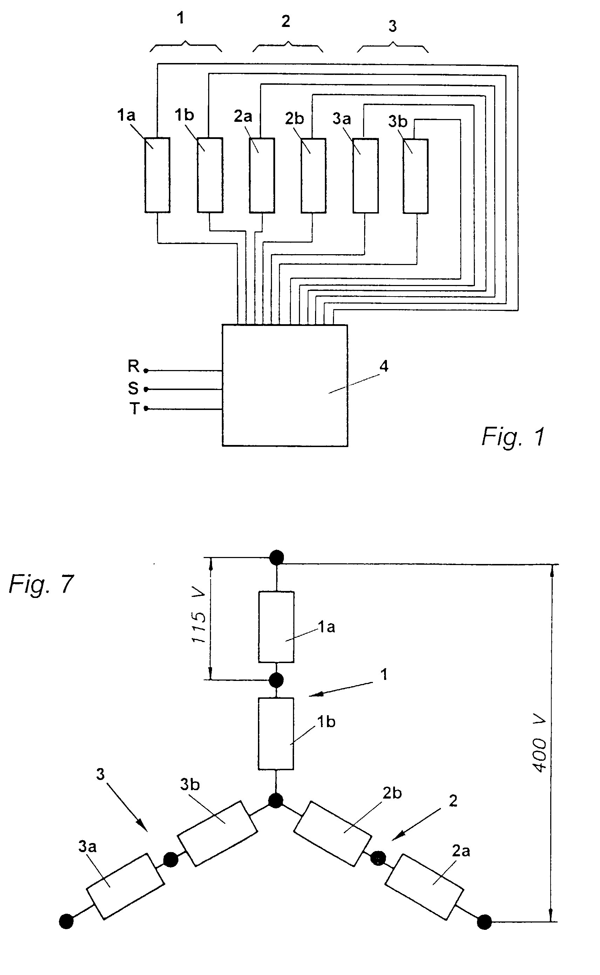

Fig. 1 zeigt im Blockschaltbild die drei Polwicklungen 1, 2 und 3 eines zwölfpoligen Drehstrommotors, die in jeweils zwei Teilwicklungen 1a, 1b und 2a, 2b bzw. 3a, 3b unterteilt sind.

Die Teilwicklungen 1a bis 3b sind mit einer Umschalteinrichtung 4 verbunden, von der sie aus einem Drehstromnetz RST mit Spannung versorgt werden. Mit Hilfe der Umschalteinrichtung 4 lassen sich die Teilwicklungen zur Erzielung unterschiedlicher Ventilatordrehzahlen in unterschiedlicher Weise miteinander verbinden und mit dem Drehstromnetz verbinden, wie später erläutert wird.

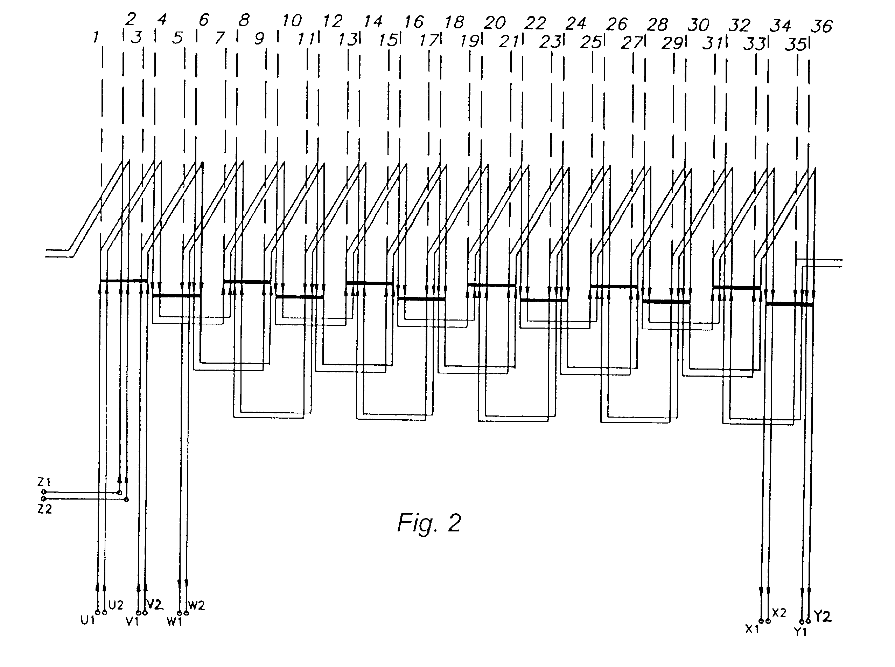

Das Wicklungsschema nach Fig. 2 zeigt für beide Wicklungsstränge den Stromlauf (Pfeile) und die dadurch entstehenden 12 Pole, die hier durch fette Querstriche versinnbildlicht sind. Die Anschlüsse der Wicklungsstränge, die mit der Umschalteinrichtung 4 zu verbinden sind, tragen die Bezeichnungen U1,U2, V1,V2, W1,W2, X1,X2, Y1,Y2 und Z1,Z2. Die rechts und links frei endend eingezeichneten Leitungen sind im Motor miteinander verbunden.

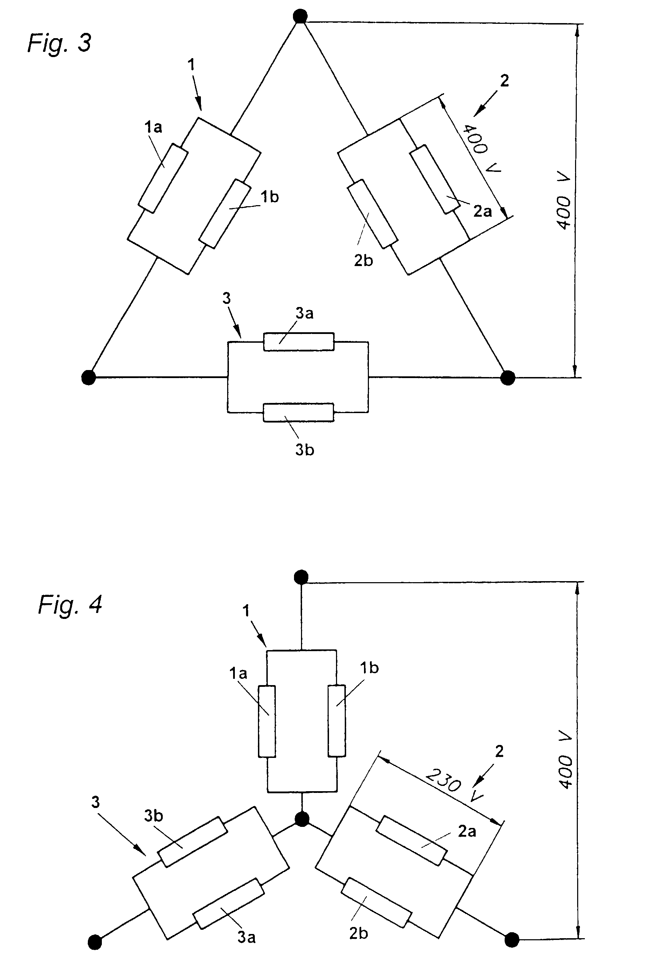

In allen Schaltungen, die nachfolgend unter Bezugnahme auf die Fig. 3 bis 7 erläutert werden, bleiben die Pole unverändert erhalten, nur der magnetische Fluß wird durch die reduzierten Strangspannungen in jenen Schaltungen gegenüber demjenigen magnetischen Fluß zurückgenommen, der in der Schaltung herrscht, mit der der Ventilator mit Nenndrehzahl betrieben wird. Hierdurch wird der Schlupf lastabhängig verändert. Ohne Last, also etwa wenn man den Ventilatorflügel abmontierte, würde der Elektromotor in allen Schaltungen auf die Nenndrehzahl von etwa 490 U/min oder etwas darunter hochdrehen, da diese dann allein durch die Anzahl 12 der Pole bestimmt ist, die ja unverändert bleibt.

Fig. 3 zeigt eine erste Schaltungskonfiguration, in der die beiden bei der Herstellung der Motorwicklungen jeweils parallel gewickelten Teilwicklungen 1a und 1b bzw. 2a und 2b sowie 3a und 3b jeweils einander parallelgeschaltet sind und die so insgesamt mit 1, 2 und 3 bezeichneten Polwicklungen in einer Dreieckschaltung miteinander verbunden sind. An den Ecken des Dreiecks wird die Drehstrom-Versorgungsspannung zugeführt, sodaß an jeder Teilwicklung die volle Netzspannung Phase gegen Phase anliegt.

Ein beispielhafter Ventilatorflügel von 1 m Durchmesser, der von einem Drehstrommotor dieses Aufbaus von 1 kW Nennleistung an einem Drehstromnetz von 400 Volt betrieben wird, erreicht in dieser Schaltungskonfiguration eine Drehzahl von 468 U/min und entwickelt ein Geräusch von 73 dBa. Das geförderte Luftvolumen ist 25 000 m³/h.

In der Schaltungskonfiguration nach Fig. 4 sind die Teilwicklungen 1a, 1b und 2a, 2b sowie 3a, 3b jeder Polwicklung 1, 2 und 3 wiederum einander parallelgeschaltet, und die Polwicklungen 1, 2 und 3 sind in einer Sternschaltung miteinander verbunden und vom selben Netz mit Strom versorgt. An jeder Teilwicklung steht somit eine Effektivspannung von 230 Volt an.

Derselbe Ventilator erreicht bei der Beschaltung nach Fig. 4 mit demselben Drehstrommotor eine Drehzahl von 377 U/min und entwickelt dabei ein Geräusch von 67,2 dBa.

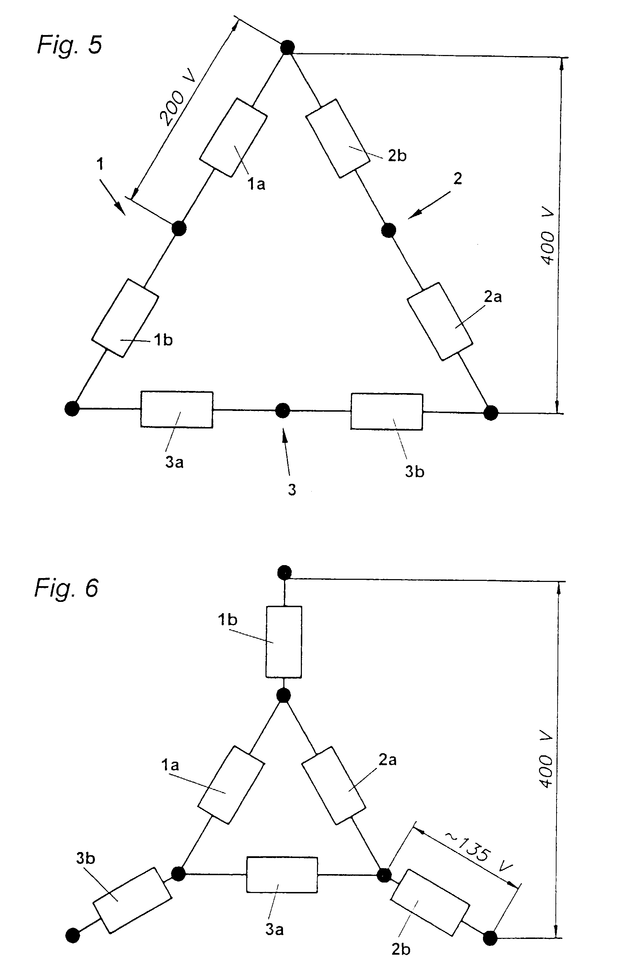

Bei der Schaltungskonfiguration nach Fig. 5 sind die beiden Teilwicklungen 1a, 1b und 2a, 2b sowie 3a, 3b jedes Pols einander in Serie geschaltet, und diese Serienschaltungen sind in einer Dreieckschaltung miteinander verbunden. Über jeder Teilwicklung steht bei der gegebenen Netzspannung von 400 Volt Phase gegen Phase somit eine Teilspannung von 200 Volt.

Mit demselben Ventilatorflügel, wie bei den Beispielen nach Fig. 3 und Fig. 4 erreicht dieser Ventilator mit demselben Elektromotor bei der Beschaltung nach Fig. 5 eine Drehzahl von 316 U/min und entwickelt ein Geräusch von etwa 59 dBa.

Bei der Ausführungsform nach Fig. 6 sind die zwei Teilwicklungen 1a, 1b und 2a, 2b sowie 3a, 3b jeder Polwicklung in Reihe geschaltet, jedoch sind die nicht mit den Netzanschlüssen verbundenen Enden dieser Reihenschaltungen jeweils mit den Verbindungspunkten der Teilwicklungen einer der anderen Reihenschaltungen verbunden, sodaß sich, wie Fig. 6 erkennen läßt, eine Dreieckschaltung aus den Teilwicklungen 1a, 2a und 3a ergibt, die über die Teilwicklungen 1b, 2b und 3b sternförmig mit dem Versorgungsnetz verbunden ist. Über jeder Teilwicklung steht somit eine Spannung von etwa 135 Volt an.

Mit demselben Ventilatorflügel und demselben Drehstrommotor erreicht der Ventilator in der Schaltungskonfiguration nach Fig. 6 eine Drehzahl von 226 U/min und entwickelt dabei ein Geräusch von 51,7 dBa.

Bei der in Fig. 7 dargestellten Schaltungskonfiguration sind die Teilwicklungen 1a, 1b und 2a, 2b sowie 3a, 3b der Polwicklungen 1, 2 und 3 jeweils einander in Serie geschaltet, und diese Serienschaltungen sind zu einer Sternschaltung miteinander verbunden, der an ihren Enden die Versorgungsspannung zugeführt ist, sodaß über jeder Teilwicklung die halbe Strangspannung, d.h. etwa 115 Volt abfallen.

Mit demselben Ventilatorflügel und demselben Drehstrommotor erreicht der Ventilator in der Schaltungskonfiguration nach Fig. 7 eine Drehzahl von 157 U/min und entwickelt dabei ein Geräusch von etwa 46,5 dBa. Das geförderte Luftvolumen ist dabei 10 800 m³/h.

Maßgeblich für die Geräuschverminderung des Ventilators gegenüber einem Betrieb an einer mit Phasenanschnittssteuerung arbeitenden Stromversorgungsschaltung ist, daß den Teilwicklungen des Drehstrommotors eine vollständig sinusförmige Wechselspannung zugeführt ist, die frei von Oberwellen ist, sodaß die Eigenvibrationen des Motors minimal sind.

Der Einsatz der Erfindung ist daher besonders bei Kühlanlagen vorteilhaft, die in bewohnter Umgebung installiert sind, etwa bei Supermärkten, weil dort in aller Regel zu Nachtzeiten ein verringerter Kühlbedarf vorhanden ist und die sich durch die Drehzahlverminderung der Ventilatoren zu Nachtzeiten ergebende Geräuschvermindering in diesem Anwendungsfall besonders wichtig ist.

Ein besonderer Vorteil der Erfindung besteht auch darin, daß in allen gezeigten Schaltungsvarianten keine besonderen Verluste entstehen, die etwa zu einer zusätzlichen Erwärmung des Drehstrommotors oder von Schaltungselementen führen könnten, die über die üblichen Wärmeverluste von Drehstrommotoren hinausgehen.

Es sei fernerhin erwähnt, daß sämtliche Schaltungskonfigurationen ggf. auch in Steinmetzschaltung betrieben werden können, in der lediglich zwei der Versorgungsnaschlüsse mit einem einphasigen Wechselstromnetz verbunden sind und der dritte Versorgungsanschluß über einen Betriebskondensator mit einem der zwei Netzanschlüsse verbunden ist. Die Vorteile dieser Schaltung sind ein guter Leistungsfaktor, guter Wirkungsgrad und leiser Lauf, doch beträgt die Leistung nur etwa 80% der Drehstromleistung, was eine entsprechende gewünschte Drehzahl reduktion zur Folge hat.

Es versteht sich, daß Weiterentwicklungen der Erfindung möglich sind. So kann jede Polwicklung ggf. auch aus drei oder mehr Teilwicklungen bestehen, sodaß dann die Möglichkeit besteht, von den Teilwicklungen einige parallel und andere in Serie zu schalten, um auf diese Weise weitere Varianten der Teilwicklungsspannungen zu erhalten, die zu entsprechend unterschiedlichen Drehzahlen führen.

Die Umschalteinrichtung 4 für die Teilwicklungen la bis 3b des Elektromotors muß entsprechend vielseitig sein. Am einfachsten läßt sich die Umschaltung durch eine Reihe von Schaltschützen bewerkstelligen, deren Steueranschlüsse von einer Schaltmatrix angesteuert sind. Die Schaltlogik ist entsprechend der Anzahl der Teilwicklungen und der mit ihnen zu erstellenden Schaltungskonfigurationen aufgebaut. Der Fachmann ist hierzu aufgrund seines Fachwissens in der Lage, sodaß auf eine detaillierte Erläuterung verzichtet werden kann.

Die Serienschaltung zweier Wicklungen, deren Windungsdrähte parallel in die Wicklungsnuten eingebracht worden sind, stellt angesichts der heute erreichten Isolationsfestigkeit von Drahtlackierungen kein Problem dar. Es ist unschwierig möglich, in eine Nut zwei Lackdrähte nebeneinander zu wickeln, die einen Spannungsunterschied von 2000 Volt aufweisen, ohne daß es zu Überschlägen zwischen den Drähten kommt.

## Patentansprüche

1. Elektrischer Ventilator mit einem Drehstrommotor und einer mit einem Drehstromnetz verbindbaren Umschalteinrichtung (4), mit der die Enden von Polwicklungen (1,2,3) verbunden sind und mit der diese Polwicklungen (1,2,3) zwecks Erzielung unterschiedlicher Drehzahlen in unterschiedlichen Konfigurationen miteinander verbindbar sind, **dadurch gekennzeichnet**, daß jede Polwicklung (1,2,3) in wenigstens zwei Teilwicklungen (1a,1b; 2a,2b;3a,3b) unterteilt ist, die jeweils für die volle Spannung Phase gegen Phase des Drehstromnetzes dimensioniert sind und deren Enden (X1,X2;Y1,Y2;Z1,Z2) individuell mit der Umschalteinrichtung (4) verbunden sind, und die Umschalteinrichtung (4) dazu eingerichtet ist, die Teilwicklungen (1a,1b;2a,2b; 3a,3b) jedes Pols wahlweise einander parallel, zum Teil einander parallel oder in Serie, die Polwicklungen (1,2,3) insgesamt in Dreieck oder in Stern zu schalten oder jeweils wenigstens Teilwicklungen (1a,2a,3a) jedes Pols mit je einer Teilwicklung (2a,3a,la) der anderen Pole in Dreieck und die andere Teilwicklung (1b,2b,3b) mit den Anschlüssen des Dreiecks zur Bildung einer äußeren Sternschaltung zu verbinden, an deren Enden über die Umschalteinrichtung (4) die Betriebsspannung zuführbar ist.

2. Elektrischer Ventilator nach Anspruch 1, dadurch gekennzeichnet, daß der Drehstrommotor ein zwölfpoliger Motor ist und jede der Polwicklungen (1,2,3) in zwei Teilwicklungen (1a,1b; 2a,2b;3a,3b) unterteilt ist und die Umschalteinrichtung (4) wenigstens die folgenden Schaltschemata enthält:
a) die Teilwicklungen jedes Pols sind jeweils einander parallel geschaltet, die drei Teilwicklungspaare sind in einer Dreieckschaltung miteinander verbunden (Fig. 3),
b) die Teilwicklungen jedes Pols sind jeweils einander parallel geschaltet, die drei Teilwicklungspaare sind in einer Sternschaltung miteinander verbunden (Fig. 4),
c) die Teilwicklungen jedes Pols sind jeweils einander in Reihe geschltet, die drei Reihenschaltungen sind in einer Dreieckschaltung miteinander verbunden (Fig. 5),
d) je eine Teilwicklung jedes Pols sind in einer Dreieckschaltung miteinander verbunden, an jede Ecke des Dreiecks ist jeweils eine der verbleibenden Teilwicklungen mit einem ihrer Enden angeschlossen, während das andere Ende für die Zuführung einer der Spannungsphasen dient (Fig. 6), und
e) die Teilwicklungen jedes Pols sind jeweils in Reihe geschaltet, die drei Reihenschaltungen sind in einer Sternschaltung miteinander verbunden (Fig. 7).

3. Elektrischer Ventilator nach Anspruch 1 oder 2, dadurch gekennzeichnet, daß Umschalteinrichtung (4) dafür eingerichtet ist, die Polwicklungen in einer Steinmetzschaltung mit einem Einphasennetz zu verbinden, wobei zwei der Anschlüsse des Drehstrommotors mit den Polen des Einphasennetzes direkt und der dritte Anschluß des Drehstrommotors mit einem der Pole des Einphasennetzes über einen Betriebskondensator verbunden ist.

## Claims

1. An electric fan comprising a three-phase motor and a switching means (4) connectable with a three-phase mains, the ends of pole windings (1, 2, 3) being connected with the switching means and said pole windings (1, 2, 3) being connectable by said switching means with one another in different configurations for achieving different speeds, characterized in that each pole winding (1, 2, 3) is divided into at least two partial windings (1a, 1bg; 2a, 2b; 3a, 3b), which are each dimensioned for the full voltage phase against phase of the three-phase mains and the ends (X1, X2; Y1, Y2; Z1, Z2) of which being individually connected with the switching means, and the switching means (4) being adapted to selectively connect the partial windings (1a, 1b; 2a, 2b; 3a, 3b) of each pole alternatively parallel to one another, partially parallel to one another or in series, to connect the pole windings (1, 2, 3) all in a triangle or in a star, or to connect at least partial windings (1a, 2a, 3a) of each pole with one partial winding (2a, 3a, 1a) of each other pole in a triangle and the other partial winding (1b, 2b, 3b) of each pole with the terminals of the triangle for forming an outer star connection, the operating voltage being suppliable at the ends thereof via the switching means (4).

2. An electric fan according to claim 1, characterized in that the three-phase motor is a twelve-pole motor and each of the pole windings (1, 2, 3) is divided into two partial windings (1a, 1b; 2a, 2b; 3a, 3b) and the switching means (4) includes at least the following connection schemes:
a) the partial windings of each pole are connected in parallel to one another, the three partial winding pairs are connected to one another in a triangle connection (Fig. 3),
b) the partial windings of each pole are connected in parallel to one another, the three partial winding pairs are connected to one another in a star connection (Fig. 4),
c) the partial windings of each pole are connected in series to one another, the three series connections are connected to one another in a triangle connection (Fig. 5),
d) one of the partial windings of each pole are connected to one another in a triangle connection at each corner of the triangle, one of the remaining partial windings is connected by one of its ends, whereas the other end serves for supplying one of the voltage phases (Fig. 6), and
e) the partial windings of each pole are connected in series, the three series connections are connected to one another in a star connection (Fig. 7).

3. An electric fan according to claim 1 or 2, characterized in that the switching means (4) is adapted to connect the pole windings in a hysteresis circuit with a single-phase mains, wherein two of the terminals of the three-phase motor are directly connected with the poles of the single-phase mains whereas the third terminal of the three-phase motor is connected with one of the poles of the single-phase mains via an operating capacitor.

## Revendications

1. Ventilateur électrique comportant un moteur à courant triphasé et un dispositif de commutation (4), pouvant être raccordé au réseau de courant triphasé, au moyen duquel les extrémités des enroulements polaires (1, 2, 3) sont reliées et au moyen duquel ces enroulements polaires (1, 2, 3) peuvent être reliés entre eux suivant des configurations différentes en vue d'obtenir des vitesses de rotation différentes, caractérisé en ce que chaque enroulement polaire (1, 2, 3) est divisé en au moins deux enroulements partiels (1a, 1b ; 2a, 2b ; 3a, 3b) qui sont chacun dimensionnés pour la tension totale phase à phase du réseau de courant triphasé et dont les extrémités (X1, X2 Y1, Y2 ; Z1, Z2) sont reliées individuellement au dispositif de commutation (4) et en ce que le dispositif de commutation (4) est conçu pour commuter les enroulements partiels (1a, 1b ; 2a, 2b ; 3a, 3b) de chaque pôle au choix parallèlement entre eux, en partie parallèlement entre eux ou en série, et les enroulements polaires (1, 2, 3) dans leur ensemble en triangle ou en étoile ou pour relier chaque fois au moins des enroulements partiels (1a, 2a, 3a) de chaque pôle chacun à un enroulement partiel respectif (2a, 3a, 1a) des autres pôles en triangle et l'autre enroulement partiel (1b, 2b, 3b) aux bornes du triangle en vue de former un circuit extérieur en étoile aux extrémités duquel la tension de service peut être appliquée au moyen du dispositif de commutation (4).

2. Ventilateur électrique suivant la revendication 1, caractérisé en ce que le moteur à courant triphasé est un moteur à douze pôles et chacun des enroulements polaires (1, 2, 3) est divisé en deux agencements partiels (1a, 1b ; 2a, 2b ; 3a, 3b) et en ce que le dispositif de commutation (4) contient au moins les schémas suivants de commutation :
a) les enroulements partiels de chaque pôle sont connectés en parallèle l'un à l'autre pour ce pôle et les trois paires d'enroulements partiels sont reliées entre elles suivant un circuit en triangle (figure 3),
b) les enroulements partiels de chaque pôle sont connectés en parallèle l'un à l'autre pour ce pôle et les trois paires d'enroulements partiels sont reliées entre elles suivant un circuit en étoile (figure 4),
c) les enroulements partiels de chaque pôle sont connectés en série l'un avec l'autre pour ce pôle et les trois circuits en série sont reliés entre eux suivant un circuit en triangle (figure 5),
d) des enroulements partiels qui sont chacun un premier enroulement partiel de chaque pôle sont reliés entre eux suivant un circuit en triangle et les enroulements partiels restants sont raccordés chacun à un angle respectif du triangle par l'une des extrémités de cet enroulement partiel, tandis que l'autre extrémité sert à l'application de l'une des phases de tension (figure 6), et
e) les enroulements partiels de chaque pôle sont connectés en série pour ce pôle et les trois circuits en série sont reliés entre eux suivant un circuit en étoile (figure 7).

3. Ventilateur électrique suivant la revendication 1 ou 2, caractérisé en ce que le dispositif de commutation (4) est conçu pour relier les enroulements polaires à un réseau monophasé suivant un circuit Steinmetz, deux des bornes du moteur à courant triphasé étant reliées directement aux pôles du réseau monophasé et la troisième borne du moteur à courant triphasé étant reliée à l'un des pôles du réseau monophasé par l'intermédiaire d'un condensateur de fonctionnement.
